# EUROPÄISCHE PATENTSCHRIFT

(11) **EP 1 180 837 B1**
(45) Veröffentlichungstag und Bekanntmachung des Hinweises auf die Patenterteilung: **01.10.2008**
(21) Anmeldenummer: 01118078.3
(22) Anmeldetag: 26.07.2001
(51) Int. Cl.: H02B 1/015

(54) **Gehäuse für Elektroinstallationseinrichtungen**
Housing for electrical devices
Coffret pour appareils électriques

(30) Priorität: 11.08.2000 DE 20014371 U
(43) Veröffentlichungstag der Anmeldung: 20.02.2002
(73) Patentinhaber: Hager Electro GmbH & Co. KG, 66131 Saarbrücken (DE)
(72) Erfinder: Loew, Thomas, 66386 St. Ingbert (DE); Bubel, Hans, 66130 Saarbrücken (DE)
(74) Vertreter: Bernhardt, Reinold

(56) Entgegenhaltungen:
- EP-A- 0 008 051
- CH-A- 554 629
- FR-A- 2 436 516

## Beschreibung

Die Erfindung betrifft ein Gehäuse für Elektroinstallationseinrichtungen, insbesondere für Verteiler, Zählerplätze und dergleichen, das ein mit dem Gehäuse verbundenes, das Gehäuse stabilisierendes Hohlprofil aufweist.

Ein derartiges Gehäuse, das als Wandplatten flache Hohlprofilplatten aufweist, die durch Winkelstücke miteinander verbunden sind, geht aus der CH-A-554629 hervor. Die Schenkel der Winkelstücke sind jeweils im Hohlraum einer Hohlprofilplatte befestigt.

Die EP-A-0008051 beschreibt eine Geräteabdeckung, die aus Profilteilen, die jeweils einen Rand der Abdeckung bilden, einsteckbaren Eckverbindern und einer Abdeckplatte zusammengesteckt ist.

Der vorliegenden Erfindung liegt die Aufgabe zugrunde, ein Gehäuse für Elektroinstallationseinrichtungen der eingangs erwähnten Art zu schaffen, das eine erhöhte Stabilität aufweist.

Das diese Aufgabe lösende Gehäuse nach der Erfindung ist dadurch gekennzeichnet, dass das Hohlprofil mit seinen Profilwänden einstückig durchgehend um zumindest eine Ecke des Gehäuses herum verläuft.

Die Hohlprofile lassen sich unter Anwendung des bekannten GID-Verfahrens erzeugen, bei dem das Werkstück in der Spritzgußform vor der vollständigen Erstarrung einer Gasinnendruckbeaufschlagung unterzogen wird.

Ein solches, z.B. unter Integrationen in eine Gehäusewand einstückig mit dem Gehäuse ausgebildetes Hohlprofil kann dem Gehäuse auch bei geringer Wanddicke eine hohe Festigkeit verleihen. Vorteilhaft wird auch für das Hohlprofil selbst im Vergleich zu Versteifungen, die wie Versteifungsrippen durch bloße Verdickung der Gehäusewand gebildet sind, verhältnismäßig wenig Material benötigt. Insbesondere läßt sich durch ein Hohlprofil eine Materialanhäufung vermeiden, welche die Gefahr der Bildung von Einfallstellen an der Gehäuseoberfläche in sich birgt, die das Aussehen eines solchen Kunststoffgehäuses stark beeinträchtigen können.

In einer bevorzugten Ausführungsform der Erfindung erstreckt sich das Hohlprofil wenigstens abschnittsweise entlang dem Rand einer Gehäusewand, wobei es insbesondere unmittelbar an dem Rand der Gehäusewand angrenzt und vorzugsweise rahmenartig um die Gehäusewand umläuft. Ein solches, z.B. an der Vorderwand eines Verteilergehäusedeckels oder der Rückwand eines Verteilergehäuses gebildetes Rahmenhohlprofil kann für eine hohe Verwindungssteifigkeit der Gehäuseteile sorgen und beeinträchtigt, selbst dann, wenn es sich im Querschnitt gesehen in den Gehäuseinnenraum hinein erstreckt, aufgrund seiner Anordnung am Gehäusewandrand kaum den zur Montage elektrischer Einrichtungen in dem Gehäuse nutzbaren Montageraum.

Natürlich kann sich das Hohlprofil im Querschnitt gesehen auch vom Gehäuse nach außen erstrecken, so daß im Gehäuseinneren an keiner Stelle Montageraum verlorengeht.

In der bevorzugten Ausführungsform der Erfindung ist das Hohlprofil derart in eine Gehäusewand integriert, daß es über einen Teil seines Umfangs durch die Gehäusewand selbst gebildet ist.

Insbesondere kann das Hohlprofil im Eckenbereich winklig aneinandergrenzender Gehäusewände gebildet sein, z.B. im Eckenbereich zwischen einer Gehäuserückwand und den Gehäuseseitenwänden, wobei das Hohlprofil durch die winklig aneinanderstoßenden Gehäusewände und einen die Gehäusewände verbindenden Umfangsabschnitt gebildet ist.

Ein solcher Umfangsabschnitt kann zur Bildung eines drei Ecken aufweisenden Hohlprofils gerade oder entsprechend einer Kreislinie gebogen sein. Ein solcher Umfangsabschnitt des Hohlprofils bildet dann im Gehäuseinneren eine Eckenabschrägung oder Eckenabrundung, durch welche die Größe des Gehäuseinnenvolumens nur geringfügig und insbesondere nur in einem für die Montage von Installationseinrichtungen kaum benötigten Raumbereich vermindert.

In einer Ausführungsform der Erfindung kann sich das Hohlprofil auch im Abstand vom Rand einer Gehäusewand entlang der Wandfläche erstrecken.

Die Erfindung soll nun anhand von Ausführungsbeispielen und der beiliegenden, sich auf diese Ausführungsbeispiele beziehenden Zeichnungen näher erläutert werden. Es zeigen:
- Fig. 1: einen gemäß einem ersten Ausführungsbeispiel für die vorliegende Erfindung ausgebildeten Gehäusedeckel eines Verteilergehäuses in einer Vorderansicht,
- Fig. 2: den Gehäusedeckel von Fig. 1 in einer Schnittansicht gemäß Schnitt A2 - A2 von Fig. 1,
- Fig. 3: den Gehäusedeckel von Fig. 1 in einer Rückansicht,
- Fig. 4: den Gehäusedeckel von Fig. 1 in einer Seitenansicht gemäß Schnitt D - D von Fig. 3,
- Fig. 5: ein Detail des Gehäusedeckels von Fig. 1 gemäß Schnitt G1 - G1 von Fig. 3,
- Fig. 6: ein weiteres Detail des Gehäusedeckels von Fig. 1,
- Fig. 7: ein weiteres Detail des Gehäusedeckels von Fig. 1 gemäß Schnitt K - K von Fig. 1,
- Fig. 8: eine Teilansicht einer Verteilerschranktür gemäß einem zweiten Ausführungsbeispiel für die vorliegenden Erfindung,
- Fig. 9: eine Teilschnittansicht der Tür von Fig. 8 gemäß Schnitt C - C,
- Fig. 10: einen Gehäusedeckel für ein Verteilergehäuse gemäß einem dritten Ausführungsbeispiel für die vorliegende Erfindung,
- Fig. 11: einen Gehäusedeckel für ein Verteilergehäuse gemäß einem vierten Ausführungsbeispiel für die vorliegende Erfindung, und
- Fig. 12: ein Gehäusedeckel für ein Verteilergehäuse gemäß einem fünften Ausführungsbeispiel für die vorliegende Erfindung.

Mit dem Bezugszeichen 1 ist in den Figuren ein Gehäusedeckel eines im übrigen nicht dargestellten Verteilergehäuses aus Kunststoff bezeichnet, welche einen z.B. unter Putz installierbaren Verteilerkastens für die Aufnahme von Anschlußschienen. Sicherungseinrichtungen usw. aufweist.

Der mit einem Ausschnitt bei 50 dargestellte Gehäusedeckel 1 weist eine Vorderwand 2 auf, in der Fenster 3 und 4 für den Zugang zu dem in dem Verteilerkasten angeordneten Sicherungseinrichtungen gebildet sind.

Zu der Vorderwand 2 des Gehäusedeckels 1 erstrecken sich senkrecht Längsseitenwände 5 und 6 sowie Schmalseitenwände 7 und 8.

Neben den Fenstern 3 und 4 sind an der Vorderwand 2 am oberen und unteren Rand einander gegenüberliegend Einbuchtungen 9 und 10 gebildet, aus denen scheibenartige Griffteile 11 und 12 vorstehen.

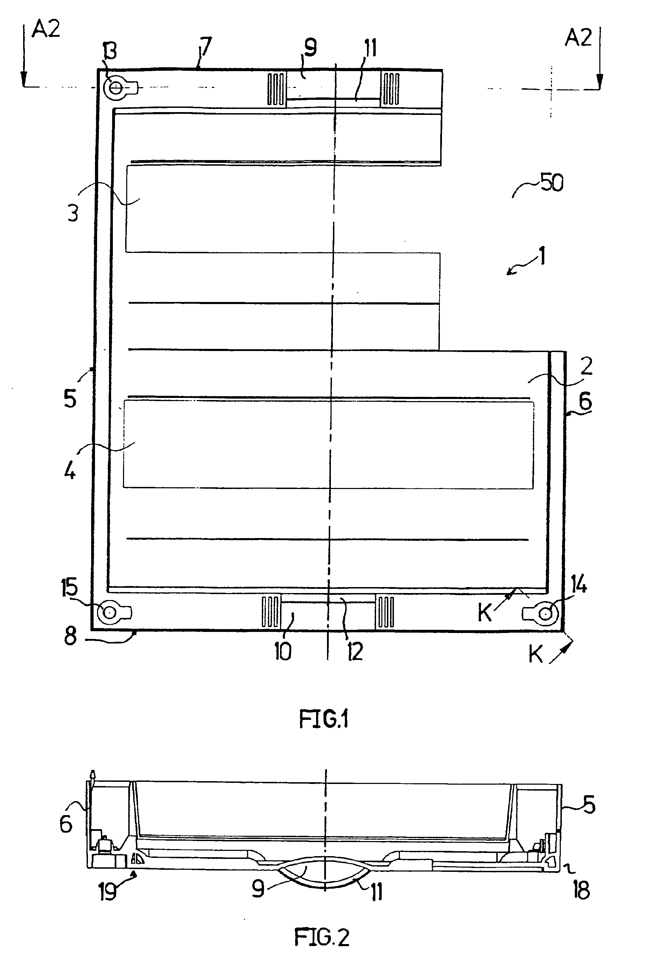

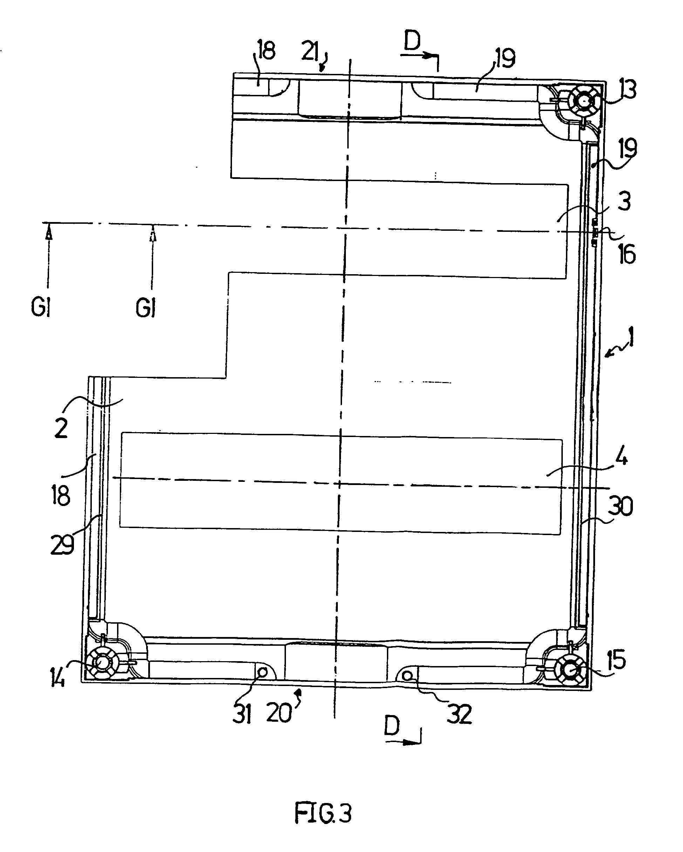

An den vier Ecken des Gehäusedeckels 1 ist jeweils eine Bolzenführung gebildet, von denen in den Fig. 1 und 3 die Führungen 13 bis 15 sichtbar sind. In die Bolzenführungen sind Bolzen zur Befestigung des Gehäusedeckels 1 an dem Verteilerkasten einsteckbar. Der Kopf dieser Bolzen weist einen seitlich vorstehenden Bart auf.

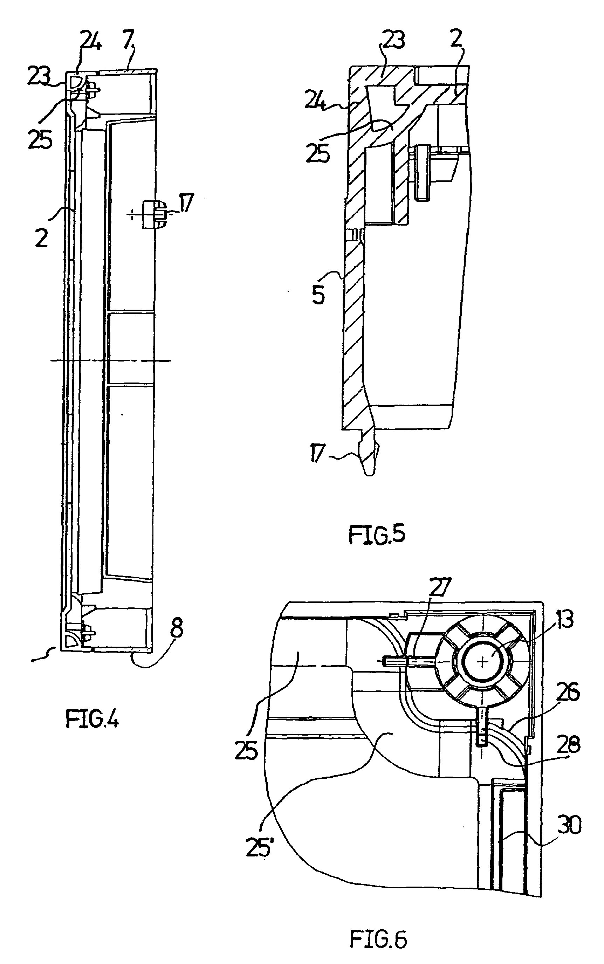

An den Längsseitenwänden 5 und 6 sind Stecknasen 16 und 17 gebildet, von denen die Stecknase 16 in Fig. 3 und die Stecknase 17 in Fig. 5 sichtbar ist. Über die Stecknasen 16 und 17 ist der Gehäusedeckel 1 in dem obengenannten Verteilerkasten einrastbar.

Mit dem Bezugszeichen 18 und 19 sind einstückig mit dem Gehäusedeckel 1 verbundene, in das Gehäuse integrierte Hohlprofile bezeichnet, die am Rand der Vorderwand 2 rahmenartig umlaufen, wobei der durch die Hohlprofile 18 und 19 gebildete Rahmen bei 20 und 21, das heißt im Bereich der Einbuchtungen 9 und 10, unterbrochen ist.

Entlang der Randseiten ist das Hohlprofil im Stoßeckenbereich jeweils der Seitenwände 5 bis 8 und der Vorderwand 2 des Gehäusedeckels 1 gebildet, wobei, wie insbesondere aus Fig. 4 und 5 hervorgeht, ein Profilschenkel 23 durch die Vorderwand 2 des Gehäusedeckels 1 und ein Profilschenkel 24 durch eine der Seitenwände 5 bis 8 des Gehäusedeckels 1 gebildet ist. Ein dritter, etwa kreisförmig gebogener Profilschenkel 25, der sich von der Vorderwand 2 zu einer der Seitenwände 5 bis 8 erstreckt, schließt den Hohlraum des Hohlprofils zum Gehäuseinnenraum hin ab.

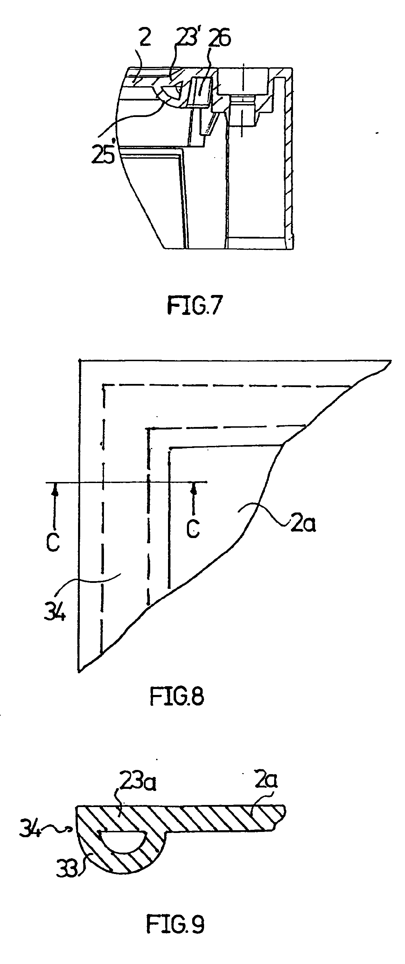

In den Eckenbereichen ist das Hohlprofil 18 bzw. 19 von den Seitenwänden weg und um die jeweilige Bolzenführung herumgeführt, wobei, wie insbesondere aus Fig. 6 und 7 zu erkennen ist, in diesem Abschnitt des Hohlprofils ein Profilschenkel 23' durch die in diesem Bereich abgestufte Vorderwand 2 des Gehäusedeckels 1 gebildet ist. Dem Profilschenkel 25 entspricht hier ein Profilschenkel 25', und es ist ein weiterer, in den Gehäuseinnenraum vorstehender Profilschenkel 26 vorgesehen. Die von den Seitenwänden des Gehäusedeckels 1 weggeführten Abschnitte der Hohlprofile 18, 19 mit den Profilschenkeln 23', 25' und 26 sind über Stabilisierungsstege 27 und 28 mit dem in den Gehäuseinnenraum vorstehenden Teil der jeweiligen Bolzenführung, in Fig. 6 der Bolzenführung 13, verbunden.

Mit den Bezugszeichen 29 und 30 sind von dem Profilschenkel 25 vorstehende Stege bezeichnet, die an den Enden abgewinkelt und mit den Seitenwänden 5 und 6 verbunden sind. Durch die Stege 29 und 30 ist an den Seitenwänden 5 und 6 auf der Gehäuseinnenseite jeweils eine Tasche gebildet.

Mit dem Bezugszeichen 31 und 32 sind bei der Herstellung des Gehäusedeckels durch Kunststoffspritzen verwendete Öffnungen bezeichnet, über welche während des Spritzvorgangs das bereits an der Außenhaut erstarrte Material einer Innendruckbeaufschlagung durch ein Druckgas derart unterzogen wird, daß sich die Hohlprofile 18, 19 ausbilden. Bei dieser als GID-Verfahren bekannten Druckbeaufschlagung erzeugt das Druckgas den Hohlraum des Hohlprofils und sorgt dabei für eine Materialausdehnung, wobei sich das Kunststoffmaterial unter der Wirkung des Innendrucks in dem die Hohlprofile bildenden Werkzeugbereich gegen die Innenwand des Spritzwerkzeugs anlegt.

Durch das rahmenartig umlaufende Hohlprofil wird eine außerordentliche Versteifung des Gehäusedeckels erreicht, die letztlich dazu führt, daß für den Gehäusedeckel (bei gleichbleibender Steifigkeit) eine deutlich geringere Materialmenge als ohne das Hohlprofil eingesetzt werden kann

Die Hohlprofile sind platzsparend im Eckenbereich am Rand der Vorderwand angeordnet, so daß der Installationsraum im Gehäuseinneren durch diese Maßnahme kaum verkleinert ist.

Im Bereich der Einbuchtungen ist das Gehäuse ausreichend versteift, so daß es keine Notwendigkeit besteht, an dieser Stelle die Hohlprofile 18 und 19 zu einem geschlossenen Rahmen zu verbinden.

Es wird nun auf die Fig. 8 und 9 bezug genommen, wo mit dem Bezugszeichen 2a eine ausschnittsweise in einem Eckenbereich dargestellte Tür 2a eines im übrigen nicht dargestellten Verteilerschranks bezeichnet ist. Geschlossen umlaufend ist am Türrand der Tür 2a ein Hohlprofil 34 mit einem Profilschenkel 23a und einem halbkreisförmigen Umfangsabschnitt 33 gebildet.

An der Schrankrückwand des Verteilerschrankes könnte ein dem Ausführungsbeispiel von Fig. 1 bis 6 ähnliches Hohlprofil umlaufend entlang den Stoßecken zwischen der Schrankrückwand und den Seitenseitenwänden gebildet sein.

Über das gezeigte rahmenartige Hohlprofil hinaus könnte die Tür 2a weitere Verformungen zur Versteifung einschließlich weiterer, z.B. die Rahmenteile verbindender Hohlprofile aufweisen.

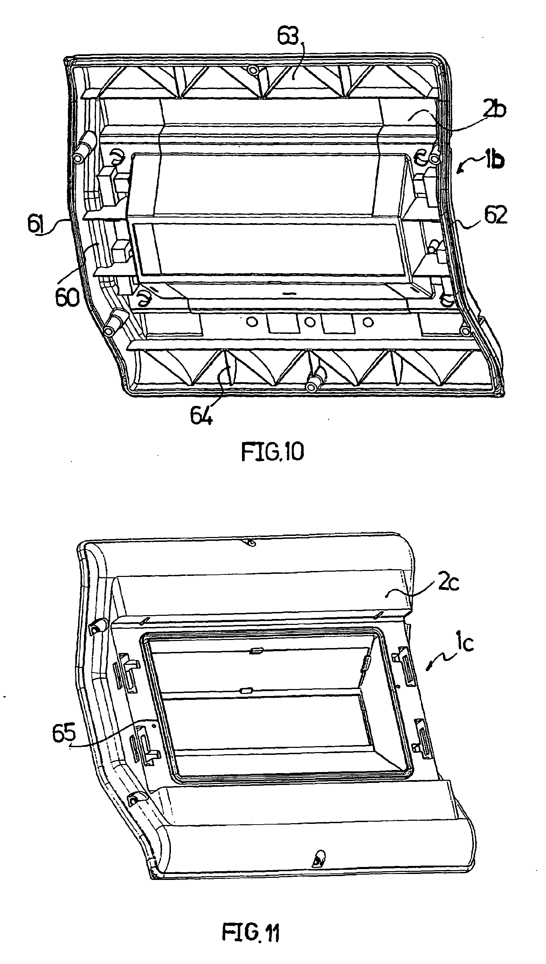

Es wird nun auf Fig. 10 bezug genommen, wo ein Gehäusedeckel für ein Verteilergehäuse dargestellt ist. Hier sind an gegenüberliegenden Seitenrändern einer Vorderwand 2b Hohlprofile gebildet, von denen in der Fig. 10 das Hohlprofil 60 sichtbar ist. Wie die Hohlprofile 18, 19 des Ausführungsbeispiels von Fig. 1 bis 7 sind auch diese Hohlprofile nur über einen Teil Ihres Umfangs durch die Vorderwand 2a und dazu senkrechte Seitenwände 60 und 61 gebildet. An den zu den Hohlprofilen senkrechten Seiten ist der Gehäusedeckel 1 bei 63 und 64 mit Versteifungsrippen versehen, welche im Zusammenwirken mit den Hohlprofilen für eine große Verwindungssteifigkeit des Gehäusedeckels sorgen.

In Fig. 11 ist ein Gehäusedeckel 1c eines Verteilergehäuses dargestellt, bei dem an einer Gehäusevorderwand 2c, abgesetzt vom Rand der Vorderwand ein die Vorderwand versteifendes Hohlprofil 65 in Form eines geschlossenen Rahmens gebildet ist.

In dem betreffenden Ausführungsbeispiel ist ähnlich wie bei dem Ausführungsbeispiel von Fig. 8 und 9 ein Umfangsabschnitt des Hohlprofils 65 durch die Vorderwand 2b des Gehäuses und einen runden, von der Vorderwand 2b vorstehenden Umfangsabschnitt 33 gebildet.

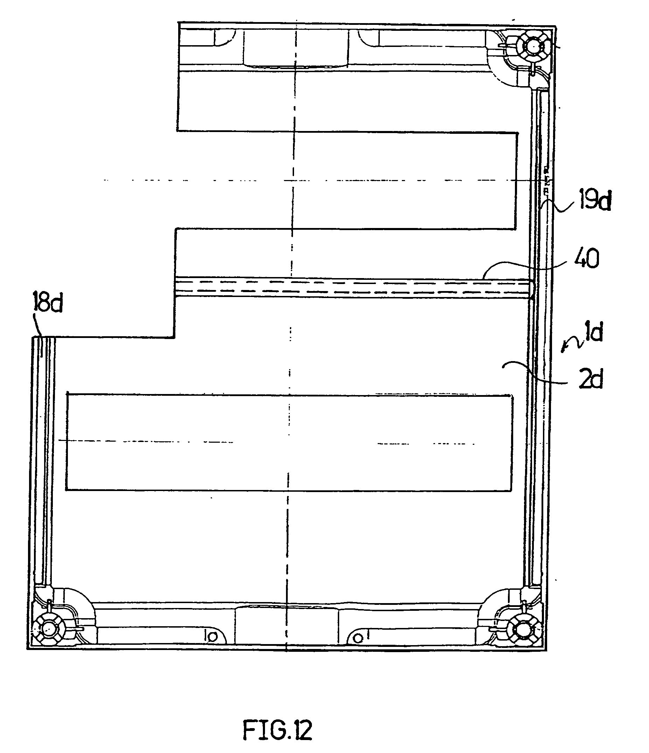

Das Ausführungsbeispiel von Fig. 12 zeigt einen Verteilerkastendeckel 1 d, welcher sich von dem Gehäusedeckel 1 des Ausführungsbeispiels von Fig. 1 bis 7 nur dadurch unterscheidet, daß sich zwischen den am Rand verlaufenden Hohlprofilen 18d und 19d ein sich quer über die Vorderwand 2d des Gehäusedeckels 1d erstreckendes weiteres Hohlprofil 40 gebildet ist. Wie die Hohlprofile 18d und 19d ist auch das Hohlprofil 40 einstückig mit dem Gehäusedeckel nach dem GID-Verfahren ausgebildet.

## Patentansprüche

1. Gehäuse für Elektroinstallationseinrichtungen, insbesondere für Verteiler, Zählerplätze und dergleichen, das ein mit dem Gehäuse (2;2a;2b;2c) verbundenes, das Gehäuse (2;2a;2b;2c) stabilisierendes Hohlprofil (18,19;34;60;65) aufweist,
**dadurch gekennzeichnet,**
**daß** das Hohlprofil (18,19;34;60;65) mit seinen Profilwänden einstückig durchgehend um zumindest eine Ecke des Gehäuses (2;2a;2b;2c) herum verläuft.

2. Gehäuse nach Anspruch 1,
**dadurch gekennzeichnet,**
**daß** sich das Hohlprofil (18, 19; 34; 60; 65) wenigstens abschnittsweise entlang dem Rand einer Gehäusewand (2; 2a; 2b; 2c) erstreckt.

3. Gehäuse nach Anspruch 1 oder 2,
**dadurch gekennzeichnet,**
**daß** das Hohlprofil (18, 19; 34; 60; 65) wenigstens abschnittsweise am Rand einer Gehäusewand (2; 2a; 2b) verläuft.

4. Gehäuse nach einem der Ansprüche 1 bis 3,
**dadurch gekennzeichnet,**
**daß** das Hohlprofil (18, 19; 34; 65) an einer Gehäusewand (2; 2a; 2c) rahmenartig umlaufend ausgebildet ist.

5. Gehäuse nach Anspruch 4,
**dadurch gekennzeichnet,**
**daß** das rahmenartig umlaufende Hohlprofil (18, 19) unterbrochen ist.

6. Gehäuse nach einem der Ansprüche 1 bis 5,
**dadurch gekennzeichnet,**
**daß** das Hohlprofil (18, 19; 34; 60; 65) einstückig mit dem Gehäuse (2; 2a) ausgebildet ist.

7. Gehäuse nach einem der Ansprüche 1 bis 6,
**dadurch gekennzeichnet,**
**daß** sich im Querschnitt gesehen das Hohlprofil (18, 19; 34; 60; 65) von dem Gehäuse (2; 2a) nach außen oder/und in den Gehäuseinnenraum hinein erstreckt.

8. Gehäuse nach einem der Ansprüche 1 bis 7,
**dadurch gekennzeichnet,**
**daß** das Hohlprofil (18, 19; 34; 60; 65) über einen Teil seines Umfangs durch eine Gehäusewand (2;2a; 2b; 2c) gebildet ist.

9. Gehäuse nach Anspruch 8,
**dadurch gekennzeichnet,**
**daß** das Hohlprofil (18,19) im Eckenbereich winklig aneinandergrenzender Gehäusewände (2, 5 bis 8) durch die Gehäusewände (2, 5 bis 8) und einen die Gehäusewände verbindenden Umfangsabschnitt (25) gebildet ist.

10. Gehäuse nach Anspruch 9,
**dadurch gekennzeichnet,**
**daß** der Umfangsabschnitt (25) unter Bildung eines dreieckigen Hohlprofils gerade oder entsprechend einer Kreislinie gebogen ist.

11. Gehäuse nach einem der Ansprüche 1 bis 10,
**dadurch gekennzeichnet,**
**daß** das Hohlprofil (18, 19; 34;60; 65) durch Beaufschlagung des Werkstücks in einer Spritzgußform mit Gasinnendruck gebildet ist.

12. Gehäuse nach einem der Ansprüche 1 bis 11,
**dadurch gekennzeichnet,**
**daß** sich das Hohlprofil (40) im Abstand vom Rand einer Gehäusewand (2d) entlang der Wandfläche erstreckt.

## Claims

1. Housing for electrical installation devices, in particular for distributors, meter mounting boards and the like, which has a hollow profile (18, 19; 34; 60; 65) which is connected to the housing (2; 2a; 2b; 2c) and stabilizes the housing (2; 2a; 2b; 2c),
**characterized**
**in that** the profile walls of the hollow profile (18, 19; 34; 60; 65) run continuously around at least one corner of the housing (2; 2a; 2b; 2c) in one piece.

2. Housing according to Claim 1,
**characterized**
**in that** the hollow profile (18, 19; 34; 60; 65) extends at least in portions along the edge of a housing wall (2; 2a; 2b; 2c).

3. Housing according to Claim 1 or 2,
**characterized**
**in that** the hollow profile (18, 19; 34; 60; 65) runs at least in portions on the edge of a housing wall (2; 2a; 2b).

4. Housing according to one of Claims 1 to 3,
**characterized**
**in that** the hollow profile (18, 19; 34; 65) is circumferentially formed on a housing wall (2; 2a; 2c) in the manner of a frame.

5. Housing according to Claim 4,
**characterized**
**in that** the hollow profile (18, 19) which runs circumferentially in the manner of a frame is interrupted.

6. Housing according to one of Claims 1 to 5,
**characterized**
**in that** the hollow profile (18, 19; 34; 60; 65) is integrally formed with the housing (2; 2a).

7. Housing according to one of Claims 1 to 6,
**characterized**
**in that**, as seen in cross section, the hollow profile (18, 19; 34; 60; 65) extends outward from the housing (2; 2a) and/or into the housing interior.

8. Housing according to one of Claims 1 to 7,
**characterized**
**in that** the hollow profile (18, 19; 34; 60; 65) is formed over part of its circumference by a housing wall (2; 2a; 2b; 2c).

9. Housing according to Claim 8,
**characterized**
**in that** the hollow profile (18, 19) is formed in the corner region of housing walls (2, 5 to 8) which adjoin one another at an angle by the housing walls (2, 5 to 8) and a circumferential section (25) which connects the housing walls.

10. Housing according to Claim 9,
**characterized**
**in that** the circumferential section (25) is straight or is bent in accordance with a circular line so as to form a triangular hollow profile.

11. Housing according to one of Claims 1 to 10,
**characterized**
**in that** the hollow profile (18, 19; 34; 60; 65) is formed by subjecting the workpiece to the action of an internal gas pressure in an injection mould.

12. Housing according to one of Claims 1 to 11,
**characterized**
**in that** the hollow profile (40) extends along the wall face at a distance from the edge of a housing wall (2d).

## Revendications

1. Coffret pour installations électriques, en particulier pour distributeurs, tableaux de comptage et similaires, qui comprend un profilé creux (18, 19 ; 34 ; 60 ; 65) relié au coffret (2 ; 2a ; 2b ; 2c) et stabilisant le coffret (2 ; 2a ; 2b ; 2c),
**caractérisé en ce que** le profilé creux (18, 19 ; 34 ; 60 ; 65) s'étend par ses parois de profilé d'un seul tenant en continu tout autour d'au moins un coin du coffret (2 ; 2a ; 2b ; 2c).

2. Coffret selon la revendication 1,
**caractérisé en ce que** le profilé creux (18, 19 ; 34 ; 60 ; 65) s'étend au moins par tronçons le long du bord de l'une des parois du coffret (2 ; 2a ; 2b ; 2c).

3. Coffret selon la revendication 1 ou 2,
**caractérisé en ce que** le profilé creux (18, 19 ; 34 ; 60 ; 65) s'étend au moins par tronçons contre le bord de l'une des parois du coffret (2 ; 2a ; 2b ; 2c).

4. Coffret selon l'une des revendications 1 à 3,
**caractérisé en ce que** le profilé creux (18, 19 ; 34 ; 65) est réalisé en périphérie à la manière d'un cadre contre une paroi du coffret (2 ; 2a ; 2c).

5. Coffret selon la revendication 4,
**caractérisé en ce que** le profilé creux (18, 19) périphérique semblable à un cadre est interrompu.

6. Coffret selon l'une des revendications 1 à 5,
**caractérisé en ce que** le profilé creux (18, 19 ; 34 ; 60 ; 65) est réalisé d'un seul tenant avec le coffret (2 ; 2a).

7. Coffret selon l'une des revendications 1 à 6,
**caractérisé en ce que** le profilé creux (18, 19 ; 34 ; 60 ; 65), vu en coupe transversale, s'étend vers l'extérieur depuis le coffret (2 ; 2a) et/ou vers l'espace intérieur au coffret.

8. Coffret selon l'une des revendications 1 à 7,
**caractérisé en ce que** le profilé creux (18, 19 ; 34 ; 60 ; 65) est formé sur une partie de sa périphérie par une paroi du coffret (2 ; 2a ; 2b ; 2c).

9. Coffret selon la revendication 8,
**caractérisé en ce que** le profilé creux (18, 19), dans la zone en coin de deux parois (2, 5 à 8) adjacentes en équerre du coffret, est formé par les parois (2, 5 à 8) du coffret et par un tronçon périphérique (25) qui relie les parois du coffret.

10. Coffret selon la revendication 9,
**caractérisé en ce que** le tronçon périphérique (25) est sous forme rectiligne ou plié sous forme cintrée en correspondance d'une ligne circulaire en formant un profilé creux triangulaire.

11. Coffret selon l'une des revendications 1 à 10,
**caractérisé en ce que** le profilé creux (18, 19 ; 34 ; 60 ; 65) est formé en attaquant la pièce à oeuvrer dans un moule de coulée par injection au moyen d'un gaz sous pression intérieure.

12. Coffret selon l'une des revendications 1 à 11,
**caractérisé en ce que** le profilé creux (40) s'étend, à distance du bord d'une paroi (2d) du coffret, le long de la surface de cette paroi.
